# EUROPEAN PATENT APPLICATION

(11) **EP 4 811 130 A1**
(43) Date of publication of application: **23.09.2026**
(21) Application number: 25165028.9
(22) Date of filing: 20.03.2025
(51) Int. Cl.: G06F 9/48, G05B 19/05, G06F 8/40, G06F 8/52, G06F 8/76, G05B 19/042

(54) **METHOD FOR EXECUTING CONTROL LOGIC ON A CONTROL DEVICE**

(71) Applicant: ABB SCHWEIZ AG, 5400 Baden (CH)
(72) Inventor: HARK, Rhaban, 64347 Griesheim (DE); KOZIOLEK, Heiko, 76227 Karlsruhe (DE); YUSSUPOV, Vladimir, 68163 Mannheim (DE)
(74) Representative: Maiwald GmbH

(57) **Abstract**

The disclosure relates to a control device (10) for controlling an industrial process in a Distributed Control System, DCS, comprising:
- at least one CPU having an execution environment (20);
- a runtime environment (21) configured to receive control logic provided in an intermediate binary code and to execute said control logic, and
- an input/output interface (40) configured for exchanging signals between the executed control logic and the industrial process.

## Description

### TECHNICAL FIELD

The present invention relates to a control device for controlling an industrial process in a Distributed Control System (DCS), a computer-implemented method, a computer program product, and an information and communication system.

### BACKGROUND

In modern industrial automation, advanced process control often relies on control devices such as programmable logic controllers (PLCs) to execute control logic within a distributed control systems (DCS). Typically, these PLCs utilize IEC 61131-3 standards, such as Structured Text or diagram-based logic definitions, to specify function blocks, for example. While these specialized languages are intentionally kept straightforward to be accessible for automation engineers, they also constrain expressiveness and complexity.

In addition, IEC 61131-3 languages e.g., have limited appeal to newer generations of developers and do not fit well with Al-based development tools, which are primarily based on common languages such as Python or C++. This mismatch contributes to a shortage of engineers with the expertise required for next-generation control logic, as proprietary or less familiar environments can discourage potential talent.

Attempts to integrate other high-level languages into PLCs often result in portability and security challenges. For instance, code compiled for a specific hardware architecture may not run on different PLC platforms, hindering code reuse and standardization. Additionally, the extensive functionality in modern languages can introduce security risks, potentially exposing critical industrial processes to unauthorized resource access or external network intrusion.

### SUMMARY

The above problem or need is at least partially solved or alleviated by the subject matters of the independent claims of the present disclosure, wherein further examples are incorporated in the dependent claims.

According to an aspect of the present disclosure, there is provided control device for controlling an industrial process in a Distributed Control System, DCS, comprising:
- at least one CPU having an execution environment;
- a runtime environment (21) configured to receive control logic provided in an intermediate binary code and to execute said control logic, and
- an input/output interface configured for exchanging signals between the executed control logic and the industrial process.

A DCS may be an industrial control architecture where multiple control devices, sensors, and actuators are interconnected via a network. This structure may be designed for high reliability and decentralization, allowing individual control devices to operate autonomously while also coordinating with other nodes. For instance, in a chemical processing plant, different control devices may manage various process parameters, and a central supervisory system may coordinate overall operation.

A control device may refer to any industrial control unit used to execute control tasks within a DCS. While it may comprise conventional Programmable Logic Controllers (PLCs), the invention is not limited to a PLC. The control device generally comprises at least one CPU, associated memory, and input/output interfaces that provide the necessary computational and communication capabilities for process control. The CPU may be responsible for running the core software routines, for example. The execution environment may refer to a software layer within the control device that coordinates and runs the various control tasks.

Within the internal execution environment of the control device, a runtime environment may be provided. This runtime environment is configured to receive code, such as control logic, in an intermediate binary format. In this context, control logic may refer to a set of algorithms, rules, and instructions responsible for managing or influencing an industrial process, for example. This code may be compiled externally from high-level programming language source code, for example. An intermediate binary code may be, for example, a bytecode or compiled representation that serves as a bridge between high-level source code and machine-specific instructions, for example.

Rather than compiling source code directly for a particular hardware architecture, the code may be first translated into a platform-neutral format by a separate compiler, e.g., by emcc, clang, or cargo. In other words, modern languages such as C++, Rust, Python, or similar, may be transformed into an architecture-agnostic binary that abstracts away details of the target hardware and operating system. This approach may not only support portability, allowing the same control logic to run on diverse hardware platforms, but also may facilitate modular development, since the runtime environment can load and execute these intermediate binaries in a secure and isolated manner.

When the runtime environment loads the platform-independent intermediate binary code, it may execute that code within the control device. In some embodiments, the runtime environment may further interpret or translate the instructions into a hardware-specific form, enabling the code to run on the device's CPU. This may e.g., be achieved through just-in-time (JIT) compilation and converts the intermediate instructions into native machine code, for example. After loading, the resulting control logic may be organized into discrete units comprising specific control algorithms, for example. In this context, binary code may refer to a compiled representation, low-level or intermediate, that a computer or runtime environment can interpret or further compile. Thus, binary code may consist of sequences of bits (0s and 1s) that correspond to specific operations recognized by a processor, for example. Executing these units enables the device to process input parameters, such as sensor data, and produce output parameters, such as control commands, in real time, allowing the control device to adapt promptly to changing process conditions and maintain precise, reliable control over the industrial process. By running at the native instruction level, the compiled binary code may achieve higher performance and lower latency compared to purely interpreted bytecode, while still preserving the portability benefits of an intermediate format.

The integration of such a runtime environment may have significant benefits. By supporting modern high-level languages, the range of development tools and libraries available, facilitating innovative control strategies while protecting legacy systems through translation may be broadened, for example. Moreover, by decoupling the control logic from specific hardware, it may enhance portability and future-proofing.

The input/output interface may be important for connecting the control device with the physical process. It may convert sensor signals, whether analogue or digital, into data that the binary code can process. Similarly, after the control logic has computed the necessary outputs, the interface may convert these outputs into signals that actuate process elements such as valves, motors, or other devices, for example. For instance, in an automated manufacturing line, the I/O interface may convert sensor readings into digital data for processing and subsequently output control signals that adjust conveyor speeds or robotic arm movements.

The method of the first aspect may in particular be an at least partially or fully computer implemented method. This means that at least one, multiple or all of the steps of the method may be carried out by a data processing system, which may comprise one or more data processing apparatuses, which may be in the form of computers or computing units, which may comprise one or more processors and data storages or memories. Different steps may be carried out by the same or by different data processing apparatuses of the data processing system.

In an example, the control device may be configured to receive input parameters for the control logic and generate output parameters therefrom. The control device may be configured not only to execute binary code but also to actively interact with the process it controls. For example, the control device may comprise sensors and associated data acquisition components that collect process data, such as temperature, pressure, flow rates, or other relevant parameters. These signals may be digitized and converted into a data format that may be processed by the internal execution logic, for example. The resulting input parameters may be then forwarded to the binary code and loaded into the runtime environment. The binary code may process the received input parameters and generate output parameters. These output parameters may represent the computed control commands, such as adjusting the speed of a pump, opening or closing a valve, or modulating a heating element, for example. The control device may retrieve these output parameters and, via its input/output interface, transmits the signals to the respective actuators or process controllers, thereby directly influencing the industrial process, for example. This continuous, real-time exchange of data ensures that the control device can dynamically adjust its control actions to maintain optimal process conditions.

In an example, the runtime environment may be configured to execute the control logic in a sandbox environment. The sandbox environment may be a controlled and isolated execution space within the runtime environment, for example. The sandbox may be implemented through software mechanisms that enforce strict boundaries on what the executing code can access. For instance, the runtime environment may restrict access to memory areas, system resources, or external communication interfaces, unless explicitly allowed by predefined policies. By isolating the binary code from the rest of the system, any faults, errors, or potential malicious behavior within a module may be contained, preventing unintended interference with other parts of the control device or the broader industrial process, for example.

In an example, the control logic may comprise a stack-based intermediate format. A stack-based intermediate format may be a type of bytecode in which each instruction takes its operands from a stack and places the result back onto the stack, rather than using fixed registers. This design abstracts the code from hardware details (e.g., CPU architecture or operating system), allowing platform-independent execution. An example is WebAssembly (WASM): source code in languages such as C++ or Python is first compiled externally into WASM, and a runtime system in the control device can then interpret or just-in-time (JIT) compile that WASM code into native machine instructions. Once source code is compiled into a stack-based intermediate format, e.g., WASM, it may be executed on any device that supports a compliant WASM runtime environment. Thus, by compiling into a WASM module, the binary code may become modular and interoperable. This may enable reuse and composition of these modules across different control devices and systems without needing to recompile for each specific target, for example. Other stack-based virtual machines or bytecode formats may also be employed. For instance, some embedded systems may use custom bytecode formats or alternative virtual machine frameworks that likewise abstract away hardware dependencies and support secure, isolated execution.

In an example, the runtime environment may be implemented as a virtual machine. The runtime environment may be implemented as a stack-based virtual machine or a comparable runtime environment that is capable of interpreting or just-in-time compiling the stack-based intermediate format, e.g., WebAssembly (WASM) module during execution. A stack-based virtual machine (VM) may utilize a stack data structure to perform operations, manage function calls, and handle intermediate values during program execution, for example. The runtime environment can either interpret the stack-based intermediate format directly or perform just-in-time (JIT) compilation, converting the intermediate binary code into optimized native code during execution. JIT compilation may improve runtime performance by dynamically optimizing frequently executed code paths while maintaining the flexibility of interpretation.

In an example, the executed control logic may be organized into one or more control logic modules. This may mean that, instead of being compiled as a single, monolithic block, the binary code may be subdivided into discrete units, each of which handles a specific portion of the control logic, e.g., an algorithm. By structuring the binary code in this manner individual modules may be created, tested and updated, without affecting the entire system, for example. The control device may further comprise a composition mechanism that allows multiple compiled binary components to be composed into a single executable unit based on defined interface contracts. Each binary code may be developed and compiled independently, typically from high-level programming language source code into an intermediate binary code (e.g., WebAssembly). The composition mechanism may allow these modules to be assembled together, rather than being developed as a monolithic program. This may support modular development, where each module can be created, tested, and maintained separately. The interface contracts may specify how the individual modules interact. They may define the exact input parameters each module expects and the output it produces, ensuring compatibility between different modules, for example. Once composed, the multiple binary components may form a single executable unit. This composite unit can be loaded and executed by the runtime environment of the control device as if it were a single, cohesive control logic module, for example. By composing modules based on standard interface contracts, the same modules can be reused in different configurations or across different applications, for example.

In an example, legacy control logic specified in an IEC 61131-3 language may be translated into native binary code using a compiler or translator. IEC 61131-3 languages (such as Ladder Diagram, Structured Text, or Function Block Diagram) are industry standard for developing control programs. Control logic written in these languages may be converted into the same intermediate binary code (e.g., a WebAssembly module) that is used for new control logic. For example, a specialized compiler or translator performs this conversion, ensuring that the semantics of the original IEC 61131-3 code are preserved in the resulting binary. By translating legacy control logic into the platform-independent binary code, the control device can run both legacy and newly developed control logic within the same runtime environment. This may allow for seamless interaction between legacy function blocks and modern control modules, fostering integration and interoperability, for example.

In an example, the control logic may be integrated as a function block within the internal execution logic of the control device. By integrating the compiled binary code as a function block, the control device effectively treats the new control logic module in the same way as it treats existing developed function blocks, for example. This integration may require that the control device pass input parameters (such as sensor readings or other process data) to the function block and, after processing, retrieve output parameters (such as control commands or computed values) from it. Thus, the communication between the function block (i.e., the compiled binary code) and the rest of the control system may be carried out via standardized interfaces. Therefore, embedding the binary code as a function block may support modularity, as each control logic module can be developed, tested, and maintained independently. Additionally, the function block abstraction allows for the reuse of these modules in different parts of the control system or even across different systems, without needing to modify the underlying integration architecture, for example.

In an example, the internal execution logic is configured to invoke the function block in a cyclical or event-triggered manner. This may mean that during each scan cycle, or in response to specific events, the control device calls the function block to process current inputs and produce corresponding outputs. For example, during each cycle, the device sequentially reads input data, e.g., sensor readings, processes the data through its function blocks and updates the output signals accordingly. This continuous, cyclic execution may ensure that the binary code is regularly updated and can respond predictably to slowly changing process conditions. In contrast, event-triggered execution may occur when the control device responds to specific conditions or events that deviate from normal operation. Instead of waiting for a next scan cycle, the device is configured to immediately invoke the relevant function block when a defined event, such as an alarm condition, a sudden change in sensor value, or an external command, occurs. Thus, event-triggered Execution may provide a mechanism for rapid response in exceptional situations, for example.

In an example, the runtime environment may replace the existing function block execution logic. This may mean that the runtime environment does not merely introduce an additional type of function block into an existing legacy code (e.g., IEC 61131-3 function blocks), but instead may replace that engine entirely. In this scenario, all control logic, including what was previously handled by legacy code programs, may run within the new runtime environment. Rather than integrating a WASM function block alongside legacy function blocks, the control device may rely solely on the platform-independent, sandboxed execution framework for both new and existing control tasks, for example. This approach may entail migrating all legacy code (e.g., IEC 61131-3 function blocks) into the intermediate binary code, ensuring a unified and modernized execution model across the entire control system, for example.

In an example, the runtime environment is configured to integrate analytics or extended logic libraries into the compiled control logic. The runtime environment may be designed not only to execute standard control algorithms but also to incorporate advanced analytics or extended logic libraries, for example. These libraries may provide complex data processing, optimization algorithms, or additional functionalities that go beyond conventional control tasks. For example, a library written in Python or C++ might include machine learning models, statistical analysis routines, or advanced optimization algorithms that can analyze process data in real time to optimize performance. The high-level language code for these extended functions may be compiled into the same intermediate binary code, e.g., a WebAssembly module, used for control logic. This may ensure that both the core control tasks, and the additional analytics or extended logic are executed within a unified, platform-independent framework, for example. For example, this integration may allow for seamless execution alongside standard function blocks, ensuring that the advanced functionalities are available without the need for separate processing hardware or software. With these extended capabilities integrated into the control device, complex calculations or data-driven optimizations in real time may be performed. For example, this may comprise dynamically adjusting control parameters based on historical process data, predictive maintenance calculations, or energy optimization strategies. The integration of advanced analytics or extended logic libraries within the runtime environment may simplify system architecture, as both legacy control logic and new, data-intensive applications run on the same platform-independent framework.

In an example, the runtime environment further comprises a capability-based security module configured to govern access of the control logic to system resources, and/or wherein the runtime environment supports partial or incremental updates of the binary code. For example, the capability-based model may assign specific capabilities, or permissions, to each binary code, defining which system resources, such as memory, input/output channels, or specific hardware interfaces, a module may be allowed to access. By restricting resource access based on capabilities, the risk that a faulty or malicious module can compromise the entire system may be minimized. In other words, even if a binary code exhibits unexpected behavior or security vulnerabilities, its ability to affect critical components of the control device may be limited.

The runtime environment may be further designed to support the updating of binary code in a modular and incremental fashion. This may mean that when a new or modified binary code becomes available, it may be integrated without the need to restart the entire control device, for example. Thus, incremental updates may allow for seamless improvements, bug fixes, or performance enhancements without disrupting the ongoing control processes.

In some embodiments, the control device may further comprise a diagnostic module configured to store execution data or logs. The diagnostic module may continuously or periodically collect and store execution data or logs during the operation of the binary code, for example. This stored execution data or logs may serve as a record of the device's operation over time, allowing operators or maintenance personnel to review system behavior, performance, and any anomalies. For example, in an event of a malfunction or performance degradation, the stored execution data or logs may provide insights into the sequence of operations and any errors that may have occurred. This detailed logging may facilitate rapid troubleshooting and fault diagnosis, helping to identify issues at the level of individual binary code or within the overall control cycle, for example. The diagnostic module may be implemented in software as a dedicated process running on the control device, or it may be embedded within the runtime environment. It may be configured to capture relevant execution metrics, error messages, and performance data, and to store this information in a memory or send it to an external monitoring system for further analysis, for example.

According to a second aspect of this disclosure, there is provided a computer-implemented method for executing control logic on the control device. A control logic source code written in a high-level or domain-specific language, such as but not limited to such as C++, Python, or JavaScript, is obtained. This source code may serve as the human-readable blueprint of the control logic, capturing the algorithms and decision-making processes that will ultimately be executed by the control device.

The source code is then compiled into a platform-independent native binary code. This may mean that the compiled binary code may be independent of specific hardware or operating system constraints. This may be achieved through a compilation process, such as but not limited by a just-in-time (JIT) compiler, that translates the human-readable source code into an intermediate binary code, such as a WebAssembly (WASM) module.

The generated control logic may be loaded into an execution platform integrated within the control device. For example, this may be sandboxed virtual machine or a similar execution platform integrated within the control device. This may ensure that the code runs in an isolated environment, protecting system resources and maintaining operational security, for example. During execution, the internal execution logic may supply input parameters to the binary code. These inputs may be sourced from sensors or data acquisition systems monitoring an industrial process, for example. For instance, temperature readings, pressure values, or flow rates may be passed to the binary code. The binary code may process the provided inputs, e.g., according to control algorithms encoded within it. After processing, the output parameters may be generated that represent control commands or adjustments, such as actuator setpoints or valve positions, for example. The control device retrieves these output parameters and integrates them into its overall control strategy. This may involve transmitting the outputs to physical actuators or further processing, for example. The process may be performed in real time, either on a cyclical (scan cycle) or event-triggered basis, ensuring that the control actions continuously adapt to the current process conditions, for example.

The technical effects and advantages described for the control device according to the first aspect apply equally to the computer-implemented method according to the second aspect. Further, embodiments and features described with reference to the computer-implemented method according to the first aspect apply mutatis mutandis to the apparatus according to the third aspect.

According to a third aspect of this disclosure, there is provided one or more computer program product(s) which comprises a program code for executing the above-described computer-implemented method according to the second aspect.

The computer program product(s) may be a computer program or computer programs as such, meaning a computer program consisting of or comprising program code to be executed by the data processing apparatus, in particular computer.

Alternatively, the computer program product(s) may be a product or products such as a data storage(s), in particular computer-readable data storage medium(s), on which the computer program(s) may be temporarily or permanently stored.

According to a fourth aspect of this disclosure, there is provided an information and communication system comprising the control device of the first aspect. For example, the control device may be part of a broader Distributed Control System (DCS), which comprises additional nodes or components. For example, the DCS may comprise a central control or network node, a remote engineering workstation, or other distributed nodes that manage communication and coordination among multiple control devices.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows a schematic diagram of a control device within an information and communication system.
Figure 2 shows a schematic flowchart of an embodiment of a computer-implemented method for executing control logic on a control device.

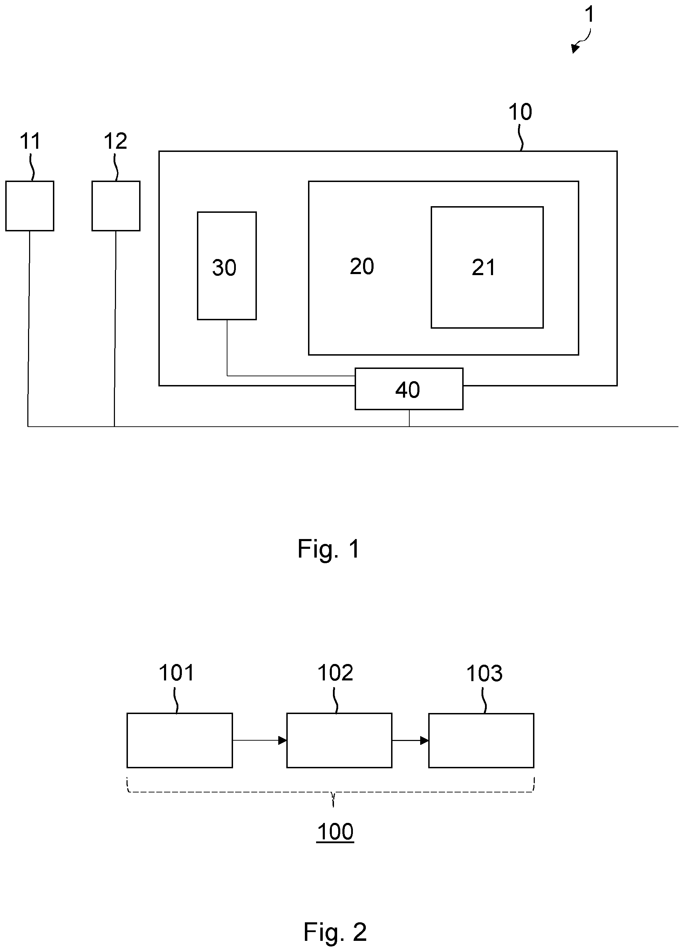

Referring to Figure 1, a schematic diagram of control device 10, such as a Programmable Logic Controller (PLC) is shown within an information and communication system 1, such as a Distributed Control System (DCS) environment, as well as the internal components that enable the compilation, loading, and execution of control logic.

The control device 10 comprises several subsystems, such as an execution environment 20 that comprises a runtime environment 21. Together, these subsystems manage the loading and execution of control logic. Further, within the control device 10, a process manager 30 is shown to the left. It may coordinate high-level tasks, oversee overall operations, and interface with other system components, e.g., DCS nodes or management software, for example. The process manager 30 may help configure or schedule processes, load control modules, and manage system resources, for example. The execution environment 20 may be responsible for orchestrating and running control tasks in real time. It may comprise further components, such as task scheduler, which may invoke various function blocks or modules, whether they are legacy IEC 61131-3 blocks ("Function Blocks") or newly compiled binary code in an intermediate binary code, for example. A code interpreter may handle traditional control code, while the WASM-specific elements may handle WebAssembly-based modules.

The runtime environment 21 may be an integrated software layer within the control device 10 that manages the entire lifecycle of the binary code, from loading and scheduling to actual execution. It may comprise a WASM Service that handles the loading, management, and scheduling of WebAssembly modules, coordinating with the device's 10 scheduling mechanism to ensure that modules run at the appropriate times, for example. An In/Out convert component may be responsible for translating the control device's 10 native data, such as sensor readings and actuator commands, into a format compatible with WebAssembly modules, and converting the modules' outputs back into signals that the device can process. Finally, a WASM runtime may interpret, or just-in-time compiles the WebAssembly modules, providing a sandboxed execution environment that prevents unauthorized access to critical system resources. By dividing responsibilities among these subcomponents, the runtime environment 21 may offer a secure, flexible, and real-time platform for executing compiled control logic within the control device 10.

The control device 10 further comprises an input/output interface 40. The input/output interface 40 may serve as a physical link between the control device and the industrial process. For example, it may be responsible for receiving sensor data, such as temperature, pressure, proximity switches, in analog or digital form. These signals may be converted into a standardized, device-readable format (e.g., a digital data structure) for further processing by the control device's 10 internal execution logic or runtime environment, for example. The input/output interface 40 may then generate e.g., actuator signals, such as commands for valves, motors, heating elements, in the format required by the physical process. The control logic, e.g., executed in a platform-independent binary code, may then produce output parameters, which the input/output interface 40 transforms into electrical signals or protocols recognized by the industrial hardware, for example.

The control device 10 may further comprise a communication module, which may handle networking and data exchange between the control device 10 and external systems, including the other DCS components 11, 12. other DCS components 11, 12 may comprise remote engineering workstations, other controllers, or supervisory systems that communicate with the control device 10 to coordinate process control across an entire plant or facility, for example. The communication module may ensure that commands, status information, or diagnostic data can flow to and from the control device 10 over standard protocols, e.g., OPC UA, fieldbus, or proprietary protocols.

Figure 2 shows a schematic flowchart of an embodiment of a computer-implemented method for executing control logic on a control device 10.

In a first step 101, a source code of a control logic, which is may be written in a high-level or domain-specific programming language, e.g., C++, Python, or IEC 61131-3, is obtained. This source code may capture algorithms and rules needed to manage the industrial process, for example.

Once the source code is available, it is compiled in a next step 102 into a platform-independent binary code. This may be a WebAssembly module, for example. This may be performed using an external compiler (e.g., emcc, clang, or cargo). This may ensure that the compiled code abstracts away hardware details and can be executed on any device that supports the corresponding runtime environment. After loading the platform-independent binary code, the runtime environment (21) may then interpret, or just-in-time compile the intermediate binary into native instructions for execution on the control device's CPU. After the code is compiled, the resulting binary modules are loaded into the control device's 10 runtime environment 21. This step may include a composition mechanism that allows multiple binary code to be combined into a single executable unit, based on predefined interface contracts, for example. These compiled units, referred to as control logic modules, may represent discrete blocks of control software containing the actual process control algorithms. By splitting the control logic into modules, each can be developed, tested, and maintained separately. Once compiled, the modules can be reused across different configurations or easily replaced for updates, thereby enhancing modularity and maintainability.

In a next step 103, the loaded modules are then executed by the runtime environment 21. This may be within a sandboxed virtual machine or a comparable execution platform. During execution, the control device 10 may provide input parameters, e.g., sensor readings, to the modules and retrieves output parameters, e.g., control signals for actuators, from them. The internal execution environment 20 may schedule these tasks either cyclically (scan cycle) or in response to specific events, for example.

In some embodiments, the runtime environment 21 supports partial or incremental updates of control logic modules. This feature allows new or modified modules to be loaded and activated without restarting the entire control device, maintaining continuous operation of the industrial process. Additionally, a diagnostic module can record execution data, performance metrics, and error messages on a continuous or periodic basis. These logs may help troubleshooting issues and optimize system performance over time, further improving the reliability and maintainability of the control device.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope.

## Claims

1. A control device (10) for controlling an industrial process in a Distributed Control System, DCS, comprising:
- at least one CPU having an execution environment (20);
- a runtime environment (21) configured to receive control logic provided in an intermediate binary code and to execute said control logic; and
- an input/output interface (40) configured for exchanging signals between the executed control logic and the industrial process.

2. The control device (10) of claim 1, wherein the control device (10) is configured to receive input parameters for the control logic and generate output parameters therefrom.

3. The control device (10) of claim 1 or 2, wherein the runtime environment (21) is configured to execute the control logic in a sandbox environment.

4. The control device (10) of any of the preceding claims, wherein the control logic comprises a stack-based intermediate format.

5. The control device (10) of claim 4, wherein the runtime environment (21) is implemented as a virtual machine.

6. The control device (10) of any of the preceding claims, wherein the executed control logic is organized into one or more control logic modules.

7. The control device (10) of any of any of the preceding claims, wherein legacy control logic specified in an IEC 61131-3 language is translated into the binary code.

8. The control device (10) of any of any of the preceding claims, wherein the control logic is integrated as a function block within the internal execution logic of the control device (10).

9. The control device (10) of claim 8, wherein the internal execution logic is configured to invoke the function block in a cyclical or event-triggered manner.

10. The control device (10) of claim 8, wherein the runtime environment replaces the existing function block execution logic.

11. The control device (10) of any of the preceding claims, wherein the runtime environment is configured to integrate analytics or extended logic libraries into the compiled binary code.

12. The control device (10) of any of the preceding claims, wherein the runtime environment (21) further comprises a capability-based security module configured to govern access of the control logic to system resources, and/or wherein the runtime environment (21) supports partial or incremental updates of the binary code.

13. A computer-implemented method (100) for executing control logic on the control device (10) of any of claims 1 to 12, the method comprising:
- (S101) obtaining a source code of the control logic,
- (S102) compiling the source code into a platform-independent, executable binary code, and
- (S103) executing the compiled control logic on said control device (10).

14. One or more computer program products comprising program code which, when executed by one or more data processing apparatuses, causes the one or more data processing apparatuses to carry out the method (100) of claim 13.

15. An information and communication system (1), comprising the control device (10) of any of claims 1 to 12.
